(19) Europäisches Patentamt
European Patent Office
Office européen des brevets

(11) Veröffentlichungsnummer: **0 055 808**
**B1**

(12) **EUROPÄISCHE PATENTSCHRIFT**

(45) Veröffentlichungstag der Patentschrift: **16.01.85**

(51) Int. Cl.⁴: **C 09 B 45/20** // D06P1/10

(21) Anmeldenummer: **81108844.2**

(22) Anmeldetag: **24.10.81**

# (54) Komplexfarbstoff-Gemische.

(30) Priorität: **31.12.80 DE 3049552**

(43) Veröffentlichungstag der Anmeldung:
**14.07.82 Patentblatt 82/28**

(45) Bekanntmachung des Hinweises auf die Patenterteilung:
**16.01.85 Patentblatt 85/3**

(84) Benannte Vertragsstaaten:
**CH DE FR GB IT LI**

(56) Entgegenhaltungen:
**DE - C - 971 896**
**GB - A - 844 873**
**US - A - 2 120 799**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Grychtol, Klaus, Dr., Seebacher Strasse 96A, D-6702 Bad Duerkheim (DE)**
Erfinder: **Lach, Dietrich, Dr., Gartenweg 16, D-6701 Friedelsheim (DE)**

**EP 0 055 808 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Gemische von mindestens zwei Kobalt-1:2-Komplexen von Azofarbstoffen der Formel I

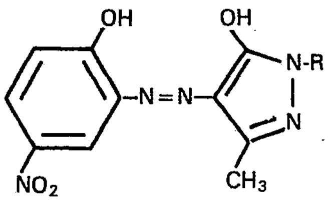

I

in der

R ein Rest der Formel

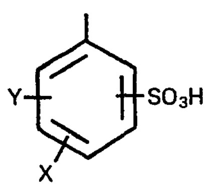 oder 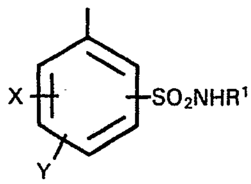 ist,

wobei

$R^1$ Wasserstoff, Methyl oder Ethyl und

X und Y Wasserstoff, Fluor, Chlor, Brom, $C_1$- bis $C_4$-Alkyl oder $C_1$- bis $C_4$-Alkoxy bedeuten.

X und Y sind z.B. $CH_3$, $C_2H_5$, $OCH_3$ und $OC_2H_5$. Bevorzugt sind für X und Y Wasserstoff.

Zur Herstellung der erfindungsgemässen Gemische kobaltiert man zweckmässigerweise Gemische der Azofarbstoffe der Formel I, die die Substituenten $SO_3H$ und $SO_2NHR^1$ enthalten, nach an sich bekannten Methoden. Die Ausgangsgemische können die Farbstoffe der Formel I mit $SO_3H$ und $SO_2NHR^1$, z.B. im Verhältnis von 9:1 bis 1:9 enthalten, bevorzugt sind Relationen von ungefähr 1:1.

Einzelheiten der Herstellung können den Beispielen entnommen werden, in denen sich Angaben über Teile und Prozente, sofern nicht anders vermerkt, auf das Gewicht beziehen.

Die erfindungsgemässen Gemische eignenen sich zum Färben von natürlichen und synthetischen Polyamiden, wie Wolle oder Nylon, und insbesondere zum Färben von Leder in braunen Tönen. Hervorzuheben ist das sehr gute Aufbauvermögen auf chromgegerbten und synthetisch-vegetabilisch nachgegerbten Chlomledern.

Gegenüber Einzelfarbstoffen, die z.B. aus US-A-2 120 799 oder DE-C-971 896 bekannt sind, zeichnen sich die erfindungsgemässen Gemische durch bessere Echtheiten und besseres Ziehvermögen auf nachgegerbtem Leder aus.

*Beispiel*

30,8 Teile 4-Nitro-2-amino-1-oxybenzol werden in 200 Teilen Eiswasser und 36 Volumenteilen konz. Salzsäure gelöst und durch Zugabe von 62 Volumenteilen 23%iger Natriumnitritlösung diazotiert. Ein eventueller Nitritüberschuss wird mit 2 Teilen Aminosulfosäure zerstört. Die gelbe Diazosuspension läuft in eine Lösung aus 26 Teilen 1-(3'-Sulfophenyl)-3-methyl-pyrazolon-(5) und 26 Teilen 1-(4-Sulfamoylphenyl)-3-methyl-pyrazolon-(5) in verdünnter Natronlauge (pH = 8).

Durch langsames Zulaufenlassen von Natronlauge während der Kupplung wird eine annähernd neutrale Reaktion aufrecht erhalten. Durch Zugabe von Eis bleibt die Temperatur unter 20°C. Nach dem Auskuppeln wird auf 40°C erwärmt, und in Portionen werden insgesamt 23 Teile hydratisiertes Kobaltchlorid eingestreut. Der pH wird durch Natronlaugezugabe bei 6 gehalten.

Der durch Aussalzen, Absaugen und Trocknen oder durch Sprühtrocknen erhaltene Farbstoff löst sich in Wasser mit brauner Farbe und färbt Polyamidmaterialien, insbesondere aber Leder in braunen Tönen, wobei neben der hohen Lichtechtheit insbesondere das gute Aufbauvermögen hervorzuheben ist.

Die folgenden Farbstoffe werden durch Einsatz der aufgezählten Kupplungskomponenten bei sonst gleicher Verfahrensweise erhalten:

1) 26 Teile 1-(3'-Sulfophenyl)-3-methyl-pyrazolon-(5),
   26 Teile 1-(3'-Sulfamoylphenyl)-3-methyl-pyrazolon-(5)
2) 26 Teile 1-(4'-Sulfophenyl)-3-methyl-pyrazolon-(5),
   26 Teile 1-(4'-Sulfamoylphenyl)-3-methyl-pyrazolon-(5)
3) 26 Teile 1-(4'-Sulfophenyl)-3-methyl-pyrazolon-(5),
   26 Teile 1-(3'-Sulfamoylphenyl)-3-methyl-pyrazolon-(5)
4) 26 Teile 1-(4'-Sulfophenyl)-3-methyl-pyrazolon-(5),
   26 Teile 1-(3'-Sulfophenyl)-3-methyl-pyrazolon-(5)
5) 26 Teile 1-(4'-Sulfamoylphenyl)-3-methylpyrazolon-(5),
   26 Teile 1-(3'-Sulfamoylphenyl)-3-methyl-pyrazolon-(5)
6) 32 Teile 1-(2',5'-Dichlor-4'-sulfophenyl)-3-methyl-pyrazolon-(5),
   26 Teile 1-(3'-Sulfamoylphenyl)-3-methyl-pyrazolon-(5)
7) 30 Teile 1-(2'-Methyl-4'-sulfophenyl)-3-methyl-pyrazolon-(5),
   26 Teile 1-(3'-Sulfophenyl)-3-methyl-pyrazolon-(5)
8) 32 Teile 1-(3'-Sulfophenyl)-3-methyl-pyrazolon-(5),
   20 Teile 1-(4'-Sulfamoylphenyl)-3-methyl-pyrazolon-(5).

**Patentansprüche**

1. Komplexfarbstoff-gemische enthaltend mindestens Kobalt-1:2-Komplexe von Azofarbstoffen der Formel

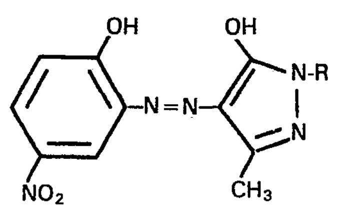

I

in der

R ein Rest der Formel

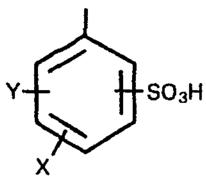 oder 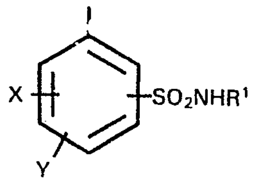 ist,

wobei

$R^1$ Wasserstoff, Methyl oder Ethyl und

X und Y Wasserstoff, Fluor Chlor, Brom, $C_1$- bis $C_4$-Alkyl oder $C_1$- bis $C_4$-Alkoxy bedeuten.

2. Verbindungen gemäss Anspruch 1 mit $R^1$ = Wasserstoff.

3. Verbindungen gemäss Anspruch 1 mit X = Y = Wasserstoff.

4. Verwendung der Gemische gemäss Anspruch 1 zum Färben natürlicher oder synthetischer Polyamide, insbesondere von Leder.

## Claims

1. A complex dye mixture containing two or more cobalt 1:2 complexes of azo dyes of the formula

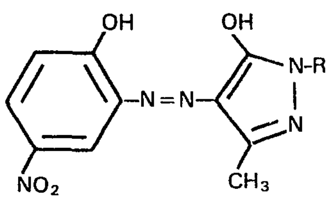 I

where R is

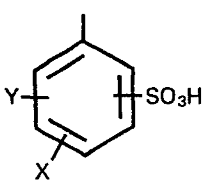 or 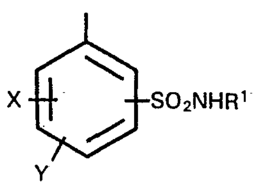

where $R_1$ is hydrogen, methyl or ethyl, and X and Y are hydrogen, fluorine, chlorine, bromine, $C_1$-$C_4$-alkyl or $C_1$-$C_4$-alkoxy.

2. A compound as claimed in claim 1, where $R^1$ is hydrogen.

3. A compound as claimed in claim 1, where X and Y are each hydrogen.

4. The use of a mixture as claimed in claim 1 for dyeing natural or synthetic polyamides and especially for dyeing leather.

## Revendications

1. Mélanges de colorants complexes renfermant au moins deux complexes de cobalt 1:2 de colorants azoïques répondant à la formule

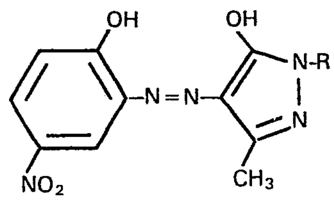 I

dans laquelle R représente un reste répondant à la formule

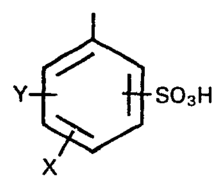 ou 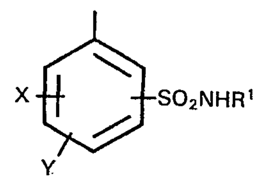

$R_1$ représentant l'hydrogène, un groupe méthyle ou éthyle et

X et Y représentant l'hydrogène, le fluor, le chlore, le brome, un groupe alcoyle comportant 1 à 4 atomes de carbone ou un groupe alcoxy comportant 1 à 4 atomes de carbone.

2. Composés selon la revendication 1, caractérisés en ce que $R^1$ représente l'hydrogène.

3. Composés selon la revendication 1, caractérisés en ce que X et Y représentent chacun l'hydrogène.

4. Utilisation des mélanges selon la revendication 1 pour teindre des polyamides naturels ou synthétiques, notamment du cuir.